# EUROPÄISCHE PATENTSCHRIFT

(11) **EP 0 959 084 B1**
(45) Veröffentlichungstag und Bekanntmachung des Hinweises auf die Patenterteilung: **13.09.2000**
(21) Anmeldenummer: 99107366.9
(22) Anmeldetag: 22.04.1999
(51) Int. Cl.: C08F 18/04

(54) **Verfahren zur Herstellung von Schutz-kolloid-stabilisierten Vinylester- und Vinylester-Ethylen-Polymerisaten in Form deren wässrigen Dispersionen**
Process for preparing aqueous dispersions of vinyl ester and vinyl ester-ethylene polymers stabilised by a protective colloid
Procédé de préparation de dispersions aqueuses de polymères d'ester vinyliques et d'ester vinyliques-ethylène stabilisés par des colloides protecteurs

(30) Priorität: 14.05.1998 DE 19821745
(43) Veröffentlichungstag der Anmeldung: 24.11.1999
(73) Patentinhaber: Wacker-Chemie GmbH, 81737 München (DE)
(72) Erfinder: Weitzel, Hans-Peter Dr., 84571 Reischach (DE); Kotschi, Udo Dr., 84489 Burghausen (DE); Hannebaum, Manfred, 84489 Burghausen (DE)
(74) Vertreter: Schuderer, Michael, Dr.

(56) Entgegenhaltungen:
- EP-A- 0 894 809
- US-A- 3 957 711

## Beschreibung

Die Erfindung betrifft ein Verfahren zur Herstellung von Vinylester- und Vinylester-Ethylen-Polymerisaten in Form deren wässrigen Dispersionen, sowie die Verwendung der damit erhältlichen Dispersionen als Klebemittel und Textilbinder.

Wässrige Kunstharzdispersionen und entsprechende Pulver sind schon seit vielen Jahren unersetzliche Additive für Anwendungen im Baubereich beispielsweise für Putze, Mörtel, Armierungsmassen, Selbstverlaufsmassen, Fliesenkleber, Farben, Wärmedämmverbundsysteme. Vor allem für hochwertige Putze wird immer mehr Bindemittel eingesetzt, die diesen Eigenschaften verleihen wie bessere mechanische Eigenschaften, bessere Witterungsbeständigkeit, geringere Verschmutzungsneigung.

Um eine hohe Hydrophobie und dennoch gute Wasserdampfdurchlässigkeit zu erhalten, wie bei Silikatputzen, werden häufig Kunstharze aus hydrophoben Monomeren wie Vinylchlorid oder Styrol/Butylacrylat verwendet. Vinylchlorid ist aus preislichen Gründen besonders attraktiv und wurde in der Vergangenheit gerne eingesetzt. Mittlerweile ist es aus ökologischen Gründen nicht mehr erwünscht. Außerdem zeigen die mit Vinylchlorid-haltigen Bindemitteln formulierten Putze eine hohe Sensibilität gegenüber weiteren notwendigen Additiven wie Verdickern oder Entschäumern, das heißt bei Rezepturänderungen, beispielsweise durch Austausch von Entschäumertypen, geht vielfach die gute Hydrophobie verloren. In der EP-A 217380 (US-A 4748202) werden beispielsweise solche VC-haltigen Dispersionen beschrieben, die in Gegenwart eines Schutzkolloids polymerisiert werden, welches sich während der Polymerisation vollständig auflöst.

In der WO 94/20556 (US-A 5708093) wird zur Verbesserung der Naßhaftung und zur Hydrophobierung von wässrigen Beschichtungsmitteln die Copolymerisation von Silanen empfohlen, wobei diese in die Schale von Core-Shell-Polymeren eingebaut werden. Nachteilig ist hierbei die Verringerung der Lagerstabilität durch den Einbau von Silaneinheiten.

In der EP-A 338486 wird ein Verfahren zur Herstellung von Core-Shell-Polymeren beschrieben, wobei diese Polymerisate nicht silanisiert sind, und in Gegenwart eines in Wasser löslichen Schutzkolloids hergestellt werden. Als Schutzkolloide werden sehr niedermolekulare Polymerisate eingesetzt, welche während der Polymerisation vollständig in Lösung gehen. Diese Dispersionen sind zur Hydrophobierung in der Bauanwendung ungeeignet, da keine dauerhafte Hydrophobierung unabhängig von der Rezeptur erhalten wird.

Die Aufgabe der Erfindung bestand darin, eine preislich attraktive, ökologisch akzeptierte, das heißt Vinylchloridfreie, und frosttaustabile Dispersion zu entwickeln, welche vergleichbar gute Eigenschaften in Bauanwendungen, beispielsweise Putzen, zeigen wie die bisher verwendeten Vinylchlorid-Dispersionen und die außerdem den Vorteil besitzt, daß die Hydrophobie der Putzformulierung weniger kritisch auf den Austausch weitere Komponenten reagiert.

Gegenstand der Erfindung ist ein Verfahren zur Herstellung von Schutzkolloid-stabilisierten Vinylester- und Vinylester-Ethylen-Polymerisaten in Form deren wässrigen Dispersionen durch Emulsionspolymerisation in Gegenwart von einem oder mehreren Schutzkolloiden, dadurch gekennzeichnet, daß die Polymerisation in Gegenwart eines hydrophoben aber silanfreien Schutzkolloids auf der Basis von (Meth)acrylsäureester-Polymerisaten mit 80 bis 95 Gew%, bezogen auf das Gesamtgewicht des Copolymers, Acrylsäure- oder Methacrylsäureester von aliphatischen Alkoholen mit 1 bis 12 C-Atomen, und 5 bis 20 Gew%, bezogen auf das Gesamtgewicht des Copolymers, ethylenisch ungesättigten Mono- oder Dicarbonsäuren, und einer Glasübergangstemperatur Tg des Copolymers von 60°C bis 120°C, und einem K-Wert nach Fikentscher des Copolymers von 20 bis 50, durchgeführt wird.

Bevorzugte Vinylester sind Vinylacetat, Vinylpropionat, Vinylbutyrat, Vinyl-2-ethylhexanoat, Vinyllaurat, 1-Methylvinylacetat, Vinylpivalat und Vinylester von alpha-verzweigten Monocarbonsäuren mit 5 bis 11 C-Atomen, beispielweise VeoVa9^{R}, VeoVa10^{R}, oder VeoVa11^{R} (Handelsnamen der Fa. Shell). Besonders bevorzugt wird Vinylacetat polymerisiert oder Vinylacetat mit einem Anteil von 1 bis 25 Gew% an olefinischen Comonomeren wie Ethylen oder Propylen copolymerisiert. In einer weiteren besonders bevorzugten Ausführungsform können neben Vinylacetat oder neben Vinylacetat und Ethylen noch 1 bis 30 Gew% weitere Vinylester, beispielsweise Vinyl-2-ethylhexanoat, Vinyllaurat, 1-Methylvinylacetat, Vinylpivalat und Vinylester von alpha-verzweigten Monocarbonsäuren mit 5 bis 11 C-Atomen, copolymerisiert werden.

Gegebenenfalls können noch 0.05 bis 10.0 Gew%, bezogen auf das Gesamtgewicht der Monomeren, Hilfsmonomere aus der Gruppe umfassend ethylenisch ungesättigte Mono- und Dicarbonsäuren und deren Amide, wie Acrylsäure, Methacrylsäure, Maleinsäure, Fumarsäure, Itaconsäure, Acrylamid, Methacrylamid; ethylenisch ungesättigte Sulfonsäuren bzw. deren Salze, vorzugsweise Vinylsulfonsäure, 2-Acrylamido-propansulfonat und N-Vinylpyrrolidon copolymerisiert werden. Die Angaben in Gewichtsprozent beziehen sich dabei immer auf das Gesamtgewicht des Vinylester- bzw. Vinylester/Ethylen-Copolymers und addieren sich auf jeweils 100 Gew%.

Geeignete Schutzkolloide sind solche auf der Basis von (Meth)acrylsäureester-Polymerisaten mit 80 bis 95 Gew%, vorzugsweise 90 bis 95 Gew%, bezogen auf das Gesamtgewicht des Copolymers, von Einheiten von Acrylsäure- oder Methacrylsäureestern aliphatischer Alkohole mit 1 bis 12 C-Atomen, und 5 bis 20 Gew%, vorzugsweise 5 bis 10 Gew%, bezogen auf das Gesamtgewicht des Copolymers, von Einheiten von ethylenisch ungesättigten Mono- oder Dicarbonsäuren, und einer Glasübergangstemperatur Tg des Copolymers von 60°C bis 120°C, und einem K-Wert nach Fikentscher des Copolymers von 20 bis 50.

Bevorzugte (Meth)acrylsäureester für das Schutzkolloid sind Methylacrylat, Methylmethacrylat, Ethylacrylat, Ethylmethacrylat, Propylacrylat, Propylmethacrylat, n-Butylacrylat, t-Butylacrylat, n-Butylmethacrylat, t-Butylmethacrylat, 2-Ethylhexylacrylat. Besonders bevorzugt sind Methylacrylat, Methylmethacrylat, n-Butylacrylat und 2-Ethylhexylacrylat.

Bevorzugte ethylenisch ungesättigte Carbonsäuren sind Acrylsäure, Methacrylsäure, Maleinsäure, Fumarsäure, Itaconsäure.

Gegebenenfalls können noch 0.05 bis 10.0 Gew%, bezogen auf das Gesamtgewicht der Monomeren, Hilfsmonomere aus der Gruppe umfassend ethylenisch ungesättigte Carbonsäureamide, wie Acrylamid oder Methacrylamid, ethylenisch ungesättigte Sulfonsäuren bzw. deren Salze, vorzugsweise Vinylsulfonsäure, 2-Acrylamido-propansulfonat, hydroxyfunktionelle Comonomere wie Hydroxyethylacrylat, und N-Vinylpyrrolidon copolymerisiert werden.

Am meisten bevorzugt sind Copolymerisate von Methylmethacrylat, Butylacrylat und Methacrylsäure bzw. Acrylsäure in den oben angegebenen Mengen.

Die Polymerzusammensetzung des Schutzkolloids wird so gewählt, daß eine Glasübergangstemperatur Tg von 60°C bis 120°C resultiert. Bevorzugt werden Schutzkolloide mit einer Tg von 60°C bis 90°C. Die Glasübergangstemperatur Tg der Polymerisate kann in bekannter Weise mittels Differential Scanning Calorimetry (DSC) ermittelt werden. Die Tg kann auch mittels der Fox-Gleichung näherungsweise vorausberechnet werden. Nach Fox T. G., Bull. Am. Physics Soc. 1, 3, page 123 (1956) gilt: 1/Tg = x₁/Tg₁ + x₂/Tg₂ + ... + xₙ/Tgₙ, wobei xₙ für den Massebruch (Gew%/100) des Monomers n steht, und Tgₙ die Glasübergangstemperatur in Grad Kelvin des Homopolymers des Monomer n ist. Tg-Werte für Homopolymerisate sind in Polymer Handbook 3nd Edition, J. Wiley & Sons, New York (1989) aufgeführt.

Der K-Wert der Schutzkolloide beträgt 20 bis 50, vorzugsweise 30 bis 40, bestimmt analog DIN 53726 in 1 %-iger Lösung von Tetrahydrofuran in Wasser. K-Wert und Tg der Polymerisate sind dabei so abgestimmt, daß sich das Schutzkolloid auch unter Polymerisationsbedingungen, bei erhöhter Temperatur (30°C bis 80°C) und einem pH von 7 nicht vollständig auflöst, das heißt die Löslichkeit in Wasser unter diesen Bedingungen maximal 10 Gew% der eingesetzten Schutzkolloidmenge beträgt.

Die Herstellung des als Schutzkolloid verwendeten Copolymers erfolgt nach bekannten Methoden der Emulsionspolymerisation bei niedrigen pH-Werten, circa 2 bis 4. Das Schutzkolloid kann als Dispersion isoliert werden, es kann aber auch in einer ersten Stufe polymerisiert werden und direkt im Anschluß daran im gleichen Reaktionsgefäß die nachfolgende Emulsionspolymerisation des Vinylester- bzw. Vinylester/Ethylen-Polymerisats durchgeführt werden.

Der Schutzkolloidanteil beträgt 5 bis 25 Gew%, vorzugsweise 10 bis 15 Gew% bezogen auf das Gesamtgewicht der Comonomere.

Die Herstellung der Vinylester- und Vinylester/Ethylen-Polymerisate nach dem Emulsionspolymerisationsverfahren wird in herkömmlichen Reaktoren oder Druckreaktoren in einem Temperaturbereich von 30°C bis 80°C durchgeführt und mit den für die Emulsionspolymerisation üblicherweise eingesetzten Methoden eingeleitet. Im Falle der Copolymerisation von gasförmigen Monomeren wie Ethylen wird vorzugsweise bei einem Druck von 5 bis 85 bar_{abs.} gearbeitet. Die Initiierung erfolgt mittels der gebräuchlichen, zumindest teilweise wasserlöslichen Radikalbildner, die vorzugsweise in Mengen von 0.01 bis 3.0 Gew% bezogen auf das Gesamtgewicht der Monomeren, eingesetzt werden. Beispiele hierfür sind Natriumpersulfat, Wasserstoffperoxid, t-Butylperoxid, t-Butylhydroperoxid; Kaliumperoxodiphosphat, Azobisisobutyronitril. Gegebenenfalls können die genannten radikalischen Initiatoren auch in bekannter Weise mit 0.01 bis 0.5 Gew%, bezogen auf das Gesamtgewicht der Monomeren, Reduktionsmittel kombiniert werden. Geeignet sind zum Beispiel Alkaliformaldehydsulfoxylate und Ascorbinsäure. Bei der Redoxinitiierung werden dabei vorzugsweise eine oder beide Redox-Katalysatorkomponenten während der Polymerisation dosiert.

Gegebenenfalls können zusätzlich zu dem Schutzkolloid-Anteil noch 1 bis 10 Gew% Emulgator, bezogen auf das Gewicht des Vinylesterpolymerisats, bei der Polymerisation eingesetzt werden. Geeignete Emulgatoren sind sowohl anionische, kationische als auch nichtionische Emulgatoren. Geeignet sind beispielsweise anionische Tenside, wie Alkylsulfate mit einer Kettenlänge von 8 bis 18 C-Atomen, Alkyl- und Alkylarylethersulfate mit 8 bis 18 C-Atomen im hydrophoben Rest und bis zu 40 Ethylen- oder Propylenoxideinheiten, Alkyl- oder Alkylarylsulfonate mit 8 bis 18 C-Atomen, Ester und Halbester der Sulfobernsteinsäure mit einwertigen Alkoholen oder Alkylphenolen. Geeignete nichtionische Tenside sind beispielsweise Alkylpolyglykolether oder Alkylarylpolyglykolether mit 8 bis 40 Ethylenoxid-Einheiten.

Die Polymerisation kann im Batch-, Semi-Batch oder Dosierverfahren aber auch kontinuierlich durchgeführt werden. Bevorzugt wird das Dosierverfahren, wobei der überwiegende Teil der Monomeren kontinuierlich zugeführt wird. Der Schutzkoloid-Anteil kann vollständig vorgelegt oder vollständig dosiert werden, auch, eine Kombination Vorlage/Dosierung ist möglich. Bevorzugt wird die vollständige Vorlage des Schutzkolloids. Während der Polymerisation wird ein pH-Wert von 5 bis 7.5, vorzugsweise 6.5 bis 7.5, eingestellt.

Die mit dem erfindungsgemäßen Verfahren erhältlichen wässrigen Dispersionen haben einen Feststoffgehalt von 30 bis 75 Gew%, vorzugsweise von 40 bis 65 Gew%.

Die schutzkolloidstabilisierten Polymere können als Dispersion in den dafür typischen Anwendungsbereichen eingesetzt werden. Beispielsweise in bauchemischen Produkten, gegebenenfalls in Verbindung mit anorganischen, hydraulisch abbindenden Bindemitteln wie Zementen (Portland-, Aluminat-, Trass-, Hütten-, Magnesia-, Phosphatzement), Gips oder Wasserglas, für die Herstellung von Bauklebern, Putzen, Spachtelmassen, Fußbodenspachtelmassen, Fugenmörtel und Farben. Ferner als Alleinbindemittel für Beschichtungsmittel und Klebemittel oder als Beschichtungs- bzw. Bindemittel für Textilien und Papier.

Bislang wurden Vinylester-haltige Dispersionen beispielsweise in Putzen wegen ihrer geringen Hydrophobie kaum eingesetzt, da die Hydrophobierung der Putze erst durch aufwendige Formulierung erreicht wurde. Überraschenderweise wurden nun, bei Verwendung von den erfindungsgemäß hergestellten Dispersionen, Putze mit überraschend guter Hydrophobie erhalten, obwohl keine zusätzlichen Hydrophobierungsmittel eingesetzt wurden und trotz der sehr hydrophilen Polymerbasis. Hervorzuheben ist auch die hohe Frost-Tau-Stabilität der Dispersionen.

Die nachfolgenden Beispiele dienen der weiteren Erläuterung der Erfindung:

### Beispiel 1 (Herstellung des Schutzkolloids):

Eine Mischung aus 744 kg Wasser, 425 g Mercaptopropionsäure, 30.4 kg einer 25 %-igen Lösung eines ethoxylierten und sulfatierten Fettalkohols, 12.8 kg Methacrylsäure, 82.9 kg Methylmethacrylat und 10.6 kg Butylacrylat wurde auf 80°C erhitzt. Zu dieser Mischung wurde kontinuierlich in 4 Stunden eine Voremulsion bestehend aus 1490 kg Wasser, 8 kg Mercaptopropionsäure, 231 kg einer 35 %-igen Lösung eines ethoxylierten und sulfatierten Nonylphenols mit 25 EO-Einheiten, 157 kg Methacrylsäure, 1650 kg Methylmethacrylat und 208 kg Butylacrylat zudosiert. Parallel wurde innerhalb von 5 Stunden eine Lösung aus 7.7 kg Ammoniumpersulfat und 172 kg Wasser zudosiert. Nach Dosierende wurde noch eine Stunde bei 80°C gerührt und anschließend abgekühlt. Man erhielt eine Dispersion mit einem Festgehalt von 44 %, einem pH-Wert von 2.8, einer Teilchengröße von 130 nm, einer Tg von 80°C und einem K-Wert von 33.

### Beispiel 2 (Herstellung des Vinylester-Polymerisats):

Eine Mischung aus 275 g Wasser und 269 g des Schutzkolloids aus Beispiel 1 wurde auf 55°C erhitzt. Zu dieser Mischung wurden kontinuierlich innerhalb 4 Stunden eine Mischung aus 520 g Vinylacetat und 350 g VeoVa^{R}10 zudosiert. Parallel wurde innerhalb von 5 Stunden eine Lösung aus 250 g Wasser und 15 g eines ethoxylierten Fettalkohols, sowie eine Lösung aus 6.5 g t-Butylhydroperoxid in 80 g Wasser und eine Lösung von 4.2 g Hydroxymethansulfinat in 80 g Wasser zudosiert. Der pH-Wert wurde mit Ammoniak auf ca. 7.5 gehalten. Nach Dosierende wurde noch eine Stunde bei 55°C gerührt und anschließend abgekühlt. Man erhielt eine Dispersion mit einem Festgehalt von 50.7 %, einem pH-Wert von 7.9, einer Teilchengröße Dw von 170 nm, einer Tg von 12°C und einer Viskosität von 1200 mPas.

### Anwendungstechnische Prüfung:

### Testung der Frost-Tau-Stabilität:

Die zu untersuchende Dispersion wurde bei -20°C innerhalb von 12 Stunden eingefroren. Anschließend entnahm man die Dispersion dem Tiefkühlschrank und ließ diese bei Raumtemperatur langsam auftauen. Danach wurden qualitativ die Viskositätsänderung, das Absitzverhalten, die Stippenbildung und die Koagulatbildung beurteilt. Mit der Dispersion aus Beispiel 2 wurde auch nach 5 Einfrier/Auftau-Cyclen keine Änderung der Viskosität, Neigung zum Absitzen oder gar Rückstandsbildung festgestellt.

### Herstellung eines Kunstharzputzes:

Mit der Dispersion aus Beispiel 2 wurde mit der nachstehenden Prüfrezeptur ein Putz 1 hergestellt. Als Vergleich diente ein analog hergestellter Putz 2 bei dem als Bindemittel eine handelsübliche Vinylchlorid-Ethylen-Dispersion (Vinnapas LL 529 der Wacker-Chemie) eingesetzt wurde.

| Prüfrezeptur : | | |
|---|---|---|
| Stoff | Menge | Funktion |
| Wasser | 73.2 | |
| Parmetol A23 | 2 | Konservierungsmittel |
| Dispex N40 | 2 | Dispergiermittel |
| Bentone EW 5% | 15 | Verdicker |
| Tylose MH2000K 2% | 30 | Verdicker |
| Lusolvan FBH | 3 | Filmbildehilfsmittel |
| Rohagit SD15 | 1 | Verdicker |
| Arbocel B400 | 5 | Faserfüllstoff |
| FPE 910T | 1 | Faserfüllstoff |
| Kronos 2056 | 30 | Füllstoff |
| Calcilit 100 | 225 | Füllstoff |
| Calcilit 500 | 170 | Füllstoff |
| Dispersion 50% | 129.8 | Bindemittel |
| Calcilit 1.8-2.5 | 320 | Füllstoff |
| Ammoniak | 0.5 | |
| Agitan 260 | 2 | Entschäumer |

### Überprüfung der Hydrophobie:

Die nach obiger Rezeptur hergestellten Putze wurden jeweils einen Tag bzw. 7 Tage bei Raumtemperatur getrocknet. Anschließend wurde mittels einer Pipette ein Wassertropfen auf den Putz aufgesetzt. Die Zeit bis zum vollständigen Verschwinden (Eindringen in den Putz) des Wassertropfens wurde zur Auswertung herangezogen. Die maximale Meßzeit betrug 8 h = 480 min, das heißt bei einer Angabe von 480 min steht der Wassertropfen noch auf dem Putz, bei kleineren Werten ist die Hydrophobie entsprechend schlechter und der Wassertropfen wird früher aufgesaugt.
Um zu überprüfen wie kritisch die Putzrezeptur ist, wurden die Bestandteile Entschäumer und Verdicker (Klasse 1 = assoziativ wirkende Verdicker, Klasse 2 = Cellulosen, etc.) variiert und der Einfluß des Austausches auf die Hydrophobie beobachtet.

Die Prüfergebnisse sind in den nachfolgenden Tabellen 1 bis 3 zusammengefaßt:

**Tabelle 1:**

| Putz 1 | Entschäumer | Hydrophobie 1Tag/7Tage [min] | Putz 2 | Entschäumer | Hydrophobie 1Tag/7Tage [min] |
|---|---|---|---|---|---|
| | Agitan 260 | 450/480 | | Agitan 260 | 480/480 |
| | ohne | 480/480 | | ohne | 170/200 |
| | Agitan 281 | 330/335 | | Agitan 281 | 17/17 |
| | Byk 031 | 450/480 | | Byk 031 | 270/270 |
| | Byk 033 | 445/480 | | Byk 033 | 320/320 |
| | Foammaster306 | 280/170 | | Foammaster306 | 4/4 |
| | Dehydran 240 | 200/270 | | Dehydran 240 | 6/6 |
| | S670 | 455/480 | | S670 | 150/330 |
| | S385 | 440/480 | | S385 | 30/30 |
| | S887 | 480/480 | | S887 | 430/400 |
| | S370 | 375/480 | | S370 | 10/13 |

**Tabelle 2:**

| Putz 1 | Verdickungsmittel 1 | Hydrophobie 1Tag/7Tage [min] | Putz 2 | Verdickungsmittel 1 | Hydrophobie 1Tag/7Tage [min] |
|---|---|---|---|---|---|
| | ohne | 35/17 | | ohne | 100/100 |
| | Rheolate 208 | 270/405 | | Rheolate 208 | 140/140 |
| | Acrysol RM 8W | 480/405 | | Acrysol RM 8W | 80/100 |
| | Rohagit SD15 | 390/360 | | Rohagit SD15 | 120/120 |
| | Coatex PE53 | 480/480 | | Coatex PE53 | 270/270 |
| | Acrysol TT935 | 440/350 | | Acrysol TT935 | 380/330 |
| | Latekoll D | 460/385 | | Latekoll D | 190/190 |
| | Polyphob 106E | 335/480 | | Polyphob 106E | 330/300 |

**Tabelle 3:**

| Putz 1 | Verdickungsmittel 2 | Hydrophobie 1Tag/7Tage [min] | Putz 2 | Verdickungsmittel 2 | Hydrophobie 1Tag/7Tage [min] |
|---|---|---|---|---|---|
| | TyloseMH10000K | 480/480 | | TyloseMH10000K | 460/430 |
| | Natrosol HBR | 480/480 | | Natrosol HBR | 430/430 |
| | Natrosol plus | 440/330 | | Natrosol plus | 240/330 |
| | 331 | | | 331 | |
| | Methocel 228 | 480/480 | | Methocel 228 | 400/350 |
| | BermocollE411FQ | 480/480 | | BermocollE411FQ | 430/430 |
| | Benone EW | 480/480 | | Benone EW | 480/430 |
| | Rhodopol 50 MD | 480/480 | | Rhodopol 50 MD | 360/360 |

Man stellt fest, daß der Putz 1 (mit dem erfindungsgemäß hergestellten Bindemittel) deutlich toleranter ist gegen Rezepturänderungen als der Vergleichsputz 2 (VCE-Bindemittel).

## Patentansprüche

1. Verfahren zur Herstellung von Schutzkolloid-stabilisierten Vinylester- und Vinylester-Ethylen-Polymerisaten in Form deren wässrigen Dispersionen durch Emulsionspolymerisation in Gegenwart von einem oder mehreren Schutzkolloiden, dadurch gekennzeichnet, daß die Polymerisation in Gegenwart eines hydrophoben aber silanfreien Schutzkolloids auf der Basis von (Meth)acrylsäureester-Polymerisaten mit 80 bis 95 Gew%, bezogen auf das Gesamtgewicht des Copolymers, Acrylsäure- oder Methacrylsäureester von aliphatischen Alkoholen mit 1 bis 12 C-Atomen, und 5 bis 20 Gew%, bezogen auf das Gesamtgewicht des Copolymers, ethylenisch ungesättigten Mono- oder Dicarbonsäuren, und einer Glasübergangstemperatur Tg des Copolymers von 60°C bis 120°C, und einem K-Wert nach Fikentscher des Copolymers von 20 bis 50, durchgeführt wird.

2. Verwendung der Verfahrensprodukte gemäß Anspruch 1 als Rezepturbestandteil in Bauklebern, Putzen, Spachtelmassen, Fußbodenspachtelmassen, Fugenmörtel und Farben.

3. Verwendung der Verfahrensprodukte gemäß Anspruch 1 als Alleinbindemittel für Beschichtungsmittel und Klebemittel.

4. Verwendung der Verfahrensprodukte gemäß Anspruch 1 als Beschichtungs- und Bindemittel für Textilien und Papier.

## Claims

1. Process for preparing protective-colloidstabilized vinyl ester or vinyl ester-ethylene polymers in the form of their aqueous dispersions by emulsion polymerization in the presence of one or more protective colloids, characterized in that the polymerization is carried out in the presence of a hydrophobic but silane-free protective colloid based on (meth)acrylate polymers with from 80 to 95% by weight, based on the total weight of the copolymer, of acrylic or methacrylic esters of aliphatic alcohols having from 1 to 12 carbon atoms, and from 5 to 20% by weight, based on the total weight of the copolymer, of ethylenically unsaturated mono- or dicarboxylic acids, and with a glass transition temperature Tg of the copolymer of from 60 to 120°C, and with a Fikentscher K value of the copolymer of from 20 to 50.

2. Use of the products of the process according to Claim 1 as a constituent of a mixing specification in construction adhesives, renders, trowelling compounds, screeds, jointing mortars or paints.

3. Use of the products of the process according to Claim 1 as sole binders for coating compositions or adhesives.

4. Use of the products of the process according to Claim 1 as coating compositions or binders for textiles or paper.

## Revendications

1. Procédé de préparation de polymères d'ester vinylique et d'ester vinylique/éthylène stabilisés par des colloïdes protecteurs, sous forme de leurs dispersions aqueuses, par polymérisation en émulsion en présence d'un ou de plusieurs colloïdes protecteurs, caractérisé en ce que la polymérisation est réalisée en présence d'un colloïde protecteur hydrophobe mais dépourvu de silane, à base de polymères de (méth)acrylate, comprenant de 80 à 95% en poids, par rapport au poids total du copolymère, d'esters acryliques ou méthacryliques d'alcools aliphatiques ayant de 1 à 12 atomes de carbone, et de 5 à 20% en poids, par rapport au poids total du copolymère, d'acides monocarboxyliques ou dicarboxyliques éthyléniquement insaturés, et avec une température de transition vitreuse Tv du copolymère de 60°C à 120°C, et une valeur K de Fikentscher du copolymère de 20 à 50.

2. Utilisation des produits de procédé selon la revendication 1, en tant que constituant d'une formulation dans des adhésifs de construction, des enduits crépis, des mastics bouche-pores, des mastics pour planchers, des mortiers à joints et des peintures.

3. Utilisation des produits de procédé selon la revendication 1, en tant que liants uniques pour des compositions de revêtements et des adhésifs.

4. Utilisation des produits de procédé selon la revendication 1, en tant que compositions de revêtements et liants pour textiles et papier.
